# FASCICULE DE BREVET EUROPEEN

(11) **EP 4 479 263 B1**
(45) Date de publication et mention de la délivrance du brevet: **20.05.2026**
(21) Numéro de dépôt: 23706544.6
(22) Date de dépôt: 16.02.2023
(51) Int. Cl.: B60K 15/03, B60K 15/077

(54) **DISPOSITIF DE FIXATION D'UN DÉFLECTEUR ANTIBRUIT À UN RÉSERVOIR EN MATIÈRE PLASTIQUE POUR VÉHICULE AUTOMOBILE**
VORRICHTUNG ZUR BEFESTIGUNG EINES GERÄUSCHREDUZIERENDEN DEFLEKTORS AN EINEM KUNSTSTOFFTANK FÜR EIN KRAFTFAHRZEUG
DEVICE FOR ATTACHING A NOISE-REDUCING DEFLECTOR TO A PLASTIC TANK FOR A MOTOR VEHICLE

(30) Priorité: 17.02.2022 LU 501508; 18.02.2022 LU 501514
(43) Date de publication de la demande: 25.12.2024
(73) Titulaire: OPmobility C-Power Belgium Research, 1200 Woluwe-Saint-Lambert (BE)
(72) Inventeur: CUVELIER, Vincent, 1130 BRUXELLES (BE)
(74) Mandataire: LLR
(86) Numéro de dépôt international: PCT/EP2023/053836
(87) Numéro de publication internationale: WO 2023/156500

(56) Documents cités:
- EP-A1- 3 744 551
- WO-A1-2010/023267
- FR-A1- 2 952 142
- US-A1- 2003 047 563

## Description

L'invention concerne le domaine technique des dispositifs de fixation à un réservoir en matière plastique pour véhicule automobile de déflecteurs antibruit (aussi appelés baffles antibruit) et les réservoirs en matière plastique pour véhicule automobile contenant des déflecteurs antibruit. Plus particulièrement, l'invention concerne un composant antibruit pour réservoir en matière plastique pour véhicule automobile comprenant au moins un déflecteur et un dispositif de fixation desdits déflecteurs antibruit configuré pour être fixé sur un réservoir en matière plastique pour véhicule automobile.

L'invention concerne également un réservoir en matière plastique pour véhicule automobile comprenant ledit composant antibruit. L'invention concerne aussi un procédé de fabrication d'un réservoir en matière plastique pour véhicule automobile.

Classiquement, dans le cas des réservoirs en matière plastique obtenus par extrusion-soufflage d'une paraison, un dispositif antibruit comprenant un déflecteur est fixé dans le réservoir en matière plastique. Ce composant, également appelé baffle antibruit, a pour but de réduire le bruit (souvent désigné par l'expression anglaise "slosh noise") associé aux vagues qui peuvent être générées au sein du réservoir lorsque le véhicule accélère brusquement, freine, prend des virages. L'expression "baffles anti-slosh" est aussi utilisée dans le jargon du métier.

On sait que les réservoirs à carburant en matière plastique subissent des variations dimensionnelles au cours de leur vie, soit tout d'abord dès leur sortie de moule, du fait de leur refroidissement qui s'accompagne d'un retrait de la matière, soit pendant leur utilisation, en raison notamment de surpressions ou de dépressions de leur contenu, soit du fait de leur dilatation thermique en cours de vie, soit encore du fait de leur vieillissement.

Les composants antibruit doivent donc être fixés de manière efficace à la paroi du réservoir, plus particulièrement lorsque ce dernier est mis en dépression, c'est-à-dire dans des conditions telle que la pression à l'intérieur du réservoir est inférieure à la pression régnant à l'extérieur du réservoir. Ainsi, le document EP 2321139 décrit un composant antibruit comprenant un dispositif de fixation sur au moins une de ces extrémités et un déflecteur destiné à coopérer avec un fluide contenu dans un réservoir en matière plastique pour véhicule automobile afin de limiter les bruits de mouvement de ce fluide, ledit dispositif de fixation étant un dispositif de fixation en queue d'aronde. Un tel dispositif de fixation en queue d'aronde comprend un premier système de nervures, dite nervures d'insertion, configuré pour être inséré par glissement au sein d'une glissière constituée par des protubérances d'une paroi du réservoir. Un tel dispositif présente l'inconvénient majeur de ne pas permettre une fixation efficace du composant antibruit et rend la réalisation du réservoir complexe. En effet, il requiert que le composant antibruit soit disposé de manière telle que le réservoir comprenne des sections d'interférence faisant saillie vers l'intérieur dans le réservoir à partir d'une surface supérieure et d'une surface inférieure de celui-ci disposées de manière à être sensiblement opposées avec un intervalle déterminé entre elles, telle qu'une première section d'interférence de ces sections d'interférence est moulée d'une seule pièce avec la paroi du réservoir en forme de dôme à surface plane et une seconde section d'interférence de ces sections d'interférence fait partie du composant antibruit, la première section d'interférence s'accouplant avec la seconde section d'interférence pour supprimer la déformation du réservoir en cas d'application d'une dépression audit réservoir.

Le document FR 2 952 142 décrit un système de fixation pour un corps creux tel qu'un réservoir de carburant pour véhicule, comprenant des ailes destinées à coulisser dans des rainures formées par la paroi du réservoir et des ailettes destinées à empêcher le coulissement du système de fixation dans le sens du retrait une fois que le dispositif de fixation est monté sur le réservoir de carburant.

L'invention a notamment pour objectif de pallier ces inconvénients de l'art antérieur.

A cet effet, l'invention a pour objectif de fournir un dispositif de fixation à un réservoir en matière plastique pour véhicule automobile d'un déflecteur destiné à coopérer avec un fluide contenu dans le réservoir en matière plastique pour limiter les bruits de mouvement de ce fluide, ledit dispositif de fixation permettant une fixation efficace et aisée du déflecteur et donc du composant antibruit au réservoir et simplifiant la réalisation du réservoir.

L'invention, dans au moins un de ses modes de réalisation, a encore pour objectif de fournir un composant antibruit comprenant un déflecteur ainsi qu'un réservoir en matière plastique pour véhicule automobile comprenant ledit composant antibruit.

Un autre objectif de l'invention, dans au moins un de ses modes de réalisation, est de mettre en œuvre un procédé de fabrication d'un réservoir en matière plastique pour véhicule automobile.

Conformément à un mode de réalisation particulier, l'invention concerne un dispositif de fixation à un réservoir en matière plastique pour véhicule automobile d'un déflecteur destiné à coopérer avec un fluide contenu dans le réservoir en matière plastique pour véhicule automobile pour limiter les bruits de mouvement de ce fluide.

Selon l'invention, un tel dispositif de fixation comprend une première extrémité comprenant un premier système de nervures comprenant au moins deux nervures, dite nervures d'insertion, s'étendant à l'opposé l'une de l'autre, le premier système de nervure étant configuré pour être inséré par glissement au sein d'une glissière constituée par des protubérances d'une paroi du réservoir, ladite première extrémité comprenant un second système de nervures configuré pour être situé en dehors de la glissière, ledit second système de nervures comprenant au moins deux nervures, dites nervures de retenue, s'étendant à l'opposé l'une de l'autre, chaque nervure de retenue du second système de nervures étant configurée pour venir en contre appui sur la paroi du réservoir et maintenir le dispositif de fixation en position, particulièrement lors d'une déformation du réservoir, plus particulièrement pour maintenir le dispositif de fixation en position lors d'une déformation du réservoir par mise en dépression, dans lequel les nervures d'insertion et les nervures de retenue sont configurées pour qu'au moins une protubérance de la paroi du réservoir formant la glissière soit intercalée axialement entre les nervures d'insertion et les nervures de retenue lorsque le dispositif de fixation est fixé au réservoir.

Le principe général de l'invention repose sur la présence d'un second système de nervures configuré pour être situé en dehors de la glissière, ledit second système de nervures comprenant au moins deux nervures, dites nervures de retenue, s'étendant à l'opposé l'une de l'autre, chaque nervure de retenue du second système de nervures étant configurée pour venir en contre appui sur la paroi du réservoir et maintenir le dispositif de fixation en position, particulièrement lors d'une déformation du réservoir, plus particulièrement pour maintenir le dispositif de fixation en position lors d'une déformation du réservoir par mise en dépression. L'invention repose en particulier sur le fait que les nervures d'insertion et les nervures de retenue sont configurées pour qu'au moins une protubérance de la paroi du réservoir formant la glissière soit intercalée axialement entre les nervures d'insertion et les nervures de retenue lorsque le dispositif de fixation est fixé au réservoir. Par cette disposition, au moins une protubérance de la paroi du réservoir formant la glissière est prise en sandwich entre les nervures d'insertion et les nervures de retenue lors d'une déformation du réservoir, plus particulièrement lors d'une déformation par mise en dépression du réservoir.

Ainsi, l'invention repose sur une approche tout à fait nouvelle et inventive de dispositif de fixation à un réservoir en matière plastique pour véhicule automobile d'un déflecteur destiné à coopérer avec un fluide contenu dans le réservoir pour limiter les bruits de mouvement de ce fluide. Le dispositif de fixation selon l'invention permet une fixation aisée au sein du réservoir par simple glissement au sein d'une glissière. Cette fixation est en outre efficace car elle permet d'éviter un détachement du dispositif de fixation de la paroi à laquelle il est fixé lors d'une déformation du réservoir. Plus particulièrement, elle permet d'éviter un détachement du dispositif de fixation de la paroi à laquelle il est fixé lors d'une déformation du réservoir par mise en dépression entraînant un écartement des protubérances constituant la glissière. Lors d'une déformation, le second système de nervures est tel qu'il comprend au moins deux nervures, dites nervures de retenue, s'étendant à l'opposé l'une de l'autre, chaque nervure de retenue du second système de nervures étant configurée pour venir en contre appui sur la paroi du réservoir lors d'une déformation dudit réservoir, préférentiellement en contre appui sur les protubérances constituant la glissière. Plus particulièrement, le second système de nervures est tel qu'il comprend au moins deux nervures, dites nervures de retenue, s'étendant à l'opposé l'une de l'autre, chaque nervure de retenue du second système de nervures étant configurée pour venir en contre appui sur la paroi du réservoir lors d'une déformation du réservoir par mise en dépression, préférentiellement en contre appui sur les protubérances constituant la glissière.

Par l'expression « le premier système de nervure étant configuré pour être inséré par glissement au sein d'une glissière constituée par des protubérances d'une paroi du réservoir », on entend désigner le fait que le premier système de nervures comprenant au moins deux nervures est glissé à l'intérieur de la glissière constituée de protubérances de la paroi. La glissière est de préférence d'un seul tenant, c'est-à-dire qu'elle est ininterrompue dans sa longueur selon l'axe de glissement. Les protubérances constituant la glissière se présentent préférentiellement sous la forme de replis de la paroi.

Par l'expression « les nervures d'insertion, s'étendant à l'opposé l'une de l'autre », on entend désigner le fait que les au moins deux nervures d'insertion constituant le premier système de nervures sont situées de part et d'autre d'une partie centrale de la première extrémité du dispositif de fixation, les axes d'extension au départ de la partie centrale du dispositif de fixation des au moins deux nervures étant des axes parallèles l'un à l'autre, préférentiellement ces axes sont confondus.

Lors de l'insertion, le second système de nervures est tel qu'il est situé en dehors de la glissière. Ce dernier comprend au moins deux nervures, dites nervures de retenue, s'étendant à l'opposé l'une de l'autre. Par l'expression « au moins deux nervures, dites nervures de retenue, s'étendant à l'opposé l'une de l'autre », on entend désigner le fait que les au moins deux nervures de retenue constituant le second système de nervures sont situées de part et d'autre d'une partie centrale de la première extrémité du dispositif de fixation, les axes d'extension au départ de la partie centrale du dispositif de fixation des au moins deux nervures étant des axes parallèles l'un à l'autre, préférentiellement ces axes sont confondus.

Par l'expression « chaque nervure de retenue du second système de nervures étant configurée pour venir en contre appui sur la paroi du réservoir et maintenir le dispositif de fixation en position, particulièrement lors d'une déformation du réservoir, plus particulièrement pour maintenir le dispositif de fixation en position lors d'une déformation du réservoir par mise en dépression », on entend désigner le fait qu'un jeu mécanique est prévu entre les au moins deux nervures de retenue et la paroi du réservoir, préférentiellement entre les au moins deux nervures de retenue et les protubérances constituant la partie supérieure de la glissière.

Par l'expression « les nervures d'insertion et les nervures de retenue sont configurées pour qu'au moins une protubérance de la paroi du réservoir formant la glissière soit intercalée axialement entre les nervures d'insertion et les nervures de retenue lorsque le dispositif de fixation est fixé au réservoir », on entend désigner le fait qu'en suivant la direction d'un axe principal du dispositif de fixation on rencontre successivement une nervure d'insertion, une protubérance de la paroi du réservoir formant la glissière et une nervure de retenue. Par cette disposition, la protubérance de la paroi du réservoir formant la glissière est prise en sandwich axialement par les nervures d'insertion et de retenue lors d'une déformation du réservoir, plus particulièrement lors d'une déformation par mise en dépression du réservoir.

Un tel dispositif de fixation permet donc une fixation efficace et aisée et présente une capacité accrue à s'adapter aux variations dimensionnelles du réservoir.

Avantageusement, le dispositif de fixation à un réservoir en matière plastique pour véhicule automobile d'un déflecteur destiné à coopérer avec un fluide contenu dans le réservoir pour limiter les bruits de mouvement de ce fluide selon l'invention, est tel que le second système de nervures comprend au moins un moyen de rigidification. Préférentiellement le moyen de rigidification comprend au moins une nervure de rigidification.

Ainsi, la présence du moyen de rigidification permet d'obtenir une tenue mécanique améliorée du dispositif de fixation lorsque le réservoir sur lequel ce dernier est fixé subi une déformation, plus particulièrement lors d'une déformation par mise en dépression du réservoir. Avantageusement le moyen de rigidification comprend au moins une nervure de rigidification, une telle nervure présentant une mise en œuvre plus facile du dispositif de fixation.

Selon un mode de réalisation préférentiel, le dispositif de fixation à un réservoir en matière plastique pour véhicule automobile d'un déflecteur destiné à coopérer avec un fluide contenu dans le réservoir pour limiter les bruits de mouvement de ce fluide selon l'invention est tel que le premier système de nervures comprend au moins une nervure d'insertion, préférentiellement deux nervures d'insertion opposées l'une de l'autre, de longueur égale à la longueur d'une glissière constituée par des protubérances d'une paroi du réservoir dans laquelle le premier système de nervure est configuré pour être inséré par glissement.

Ainsi, un premier système de nervures comprenant au moins une nervure d'insertion, préférentiellement deux nervures d'insertion opposées l'une de l'autre, de longueur égale à la longueur de la glissière dans laquelle le premier système de nervure est configuré pour être inséré par glissement permet d'obtenir une fixation améliorée et une meilleure répartition des contraintes mécaniques.

Selon un mode de réalisation préférentiel, le dispositif de fixation à un réservoir en matière plastique pour véhicule automobile d'un déflecteur destiné à coopérer avec un fluide contenu dans le réservoir pour limiter les bruits de mouvement de ce fluide selon l'invention est tel que le premier système de nervures présente une largeur de dimension sensiblement inférieure à la largeur d'une glissière constituée par des protubérances d'une paroi du réservoir au sein de laquelle le premier système de nervures est configuré pour être inséré par glissement.

Ainsi, un premier système de nervures présentant une largeur de dimension sensiblement inférieure à la largeur de la glissière au sein de laquelle le premier système de nervure est configuré pour être inséré par glissement permet une insertion plus aisée au sein de la glissière.

Par l'expression « un premier système de nervures présente une largeur de dimension sensiblement inférieure à la largeur de la glissière au sein de laquelle le premier système de nervure est configuré pour être inséré par glissement », on entend désigner le fait que la largeur du premier système de nervures est inférieure à la largeur de la glissière mais reste supérieure à la distance séparant les protubérances constituant la partie supérieure de la glissière.

Selon un mode de réalisation préférentiel, le dispositif de fixation à un réservoir en matière plastique pour véhicule automobile d'un déflecteur destiné à coopérer avec un fluide contenu dans le réservoir pour limiter les bruits de mouvement de ce fluide selon l'invention est tel qu'il est monobloc.

Ainsi, un dispositif de fixation monobloc permet une rigidité accrue du dispositif de fixation.

Selon un mode de réalisation préférentiel, le dispositif de fixation à un réservoir en matière plastique pour véhicule automobile d'un déflecteur destiné à coopérer avec un fluide contenu dans le réservoir pour limiter les bruits de mouvement de ce fluide selon l'invention est tel qu'au moins une nervure d'insertion est en vis-à-vis d'au moins une nervure de retenue.

Ainsi, un dispositif de fixation d'un déflecteur comprenant au moins une nervure d'insertion située en vis-à-vis d'au moins une nervure de retenue permet une meilleure répartition des contraintes et réduit des effets de cisaillement.

Par l'expression « au moins une nervure d'insertion située en vis-à-vis d'au moins une nervure de retenue », on entend désigner le fait qu'au moins une nervure d'insertion se trouve, par rapport à la glissière, à l'opposé d'au moins une nervure de retenue. Le fait qu'une nervure d'insertion soit située, par rapport à la glissière, à l'opposé d'une nervure de retenue signifie plus particulièrement que ces nervures d'insertion et de retenue sont situées de part et d'autre de la glissière et sont traversées par un même axe parallèle à un axe principal du dispositif de fixation.

Selon un mode de réalisation préférentiel, le dispositif de fixation à un réservoir en matière plastique pour véhicule automobile d'un déflecteur destiné à coopérer avec un fluide contenu dans le réservoir pour limiter les bruits de mouvement de ce fluide selon l'invention est tel que ledit second système de nervures comprend au moins une nervure de retenue comprenant un côté concave par rapport à au moins une nervure d'insertion.

Ainsi, une nervure de retenue présentant un côté concave par rapport à au moins une nervure d'insertion permet d'obtenir une insertion plus aisée au sein de la glissière.

Par l'expression « une nervure de retenue présentant un côté concave par rapport à au moins une nervure d'insertion », on entend désigner plus particulièrement le fait que la partie de la nervure de retenue en regard de la partie supérieure de la glissière est concave.

Selon un mode de réalisation préférentiel, le dispositif de fixation à un réservoir en matière plastique pour véhicule automobile d'un déflecteur destiné à coopérer avec un fluide contenu dans le réservoir pour limiter les bruits de mouvement de ce fluide selon l'invention est tel qu'il comprend au moins un moyen de fixation configuré pour l'attache du déflecteur. Le moyen de fixation est préférentiellement choisi parmi un moyen de fixation mécanique tel qu'une partie d'un emboîtage élastique tel qu'un moyen d'enclipsage, une partie d'un assemblage par goujon ou agrafe.

Ainsi, un dispositif de fixation d'un déflecteur comprenant un moyen de fixation dudit déflecteur permet un montage aisé du composant constitué du dispositif de fixation et du déflecteur au sein du réservoir le contenant.

Selon un mode de réalisation préférentiel, le dispositif de fixation à un réservoir en matière plastique pour véhicule automobile d'un déflecteur destiné à coopérer avec un fluide contenu dans le réservoir pour limiter les bruits de mouvement de ce fluide comprend en outre des moyens de verrouillage destinés à coopérer par complémentarité de forme avec une paroi du réservoir de manière à empêcher un retrait du dispositif de fixation d'une glissière constituée par des protubérances d'une paroi du réservoir.

Ainsi, les moyens de verrouillage permettent d'améliorer encore la fixation du dispositif de fixation au réservoir en empêchant un déplacement du dispositif de fixation selon une direction de déplacement supplémentaire.

Par l'expression « moyens de verrouillage destinés à coopérer par complémentarité de forme avec une paroi du réservoir de manière à empêcher un retrait du dispositif de fixation d'une glissière constituée par des protubérances d'une paroi du réservoir », on entend désigner plus particulièrement le fait que la coopération de forme entre les moyens de verrouillage et la paroi du réservoir permet de limiter un déplacement du dispositif de fixation, notamment un coulissement du dispositif de fixation dans la glissière dans le sens du retrait. Les moyens de verrouillage sont par exemple des moyens de clipsage.

Selon un mode de réalisation préférentiel, les moyens de verrouillage comprennent une languette de retenue élastique qui, lorsque le dispositif de fixation est fixé au réservoir, est agencée selon une configuration de verrouillage dans laquelle elle coopère par complémentarité de forme avec une saillie d'une paroi du réservoir de manière à empêcher un retrait du dispositif de fixation d'une glissière constituée par des protubérances d'une paroi du réservoir, la languette de retenue étant apte à être déformée à l'encontre d'une force élastique de rappel en configuration de verrouillage afin de déverrouiller les moyens de verrouillage et permettre un retrait du dispositif de fixation de la glissière constituée par des protubérances d'une paroi du réservoir.

Il est ainsi possible de mettre en œuvre les moyens de verrouillage de manière simple et peu coûteuse. On remarque que le retrait du dispositif de fixation est simple puisqu'il suffit de déformer la languette de retenue pour déverrouiller le dispositif de fixation et le retirer en le faisant coulisser dans la glissière.

Par l'expression selon laquelle la languette de retenue « coopère par complémentarité de forme avec une saillie d'une paroi du réservoir de manière à empêcher un retrait du dispositif de fixation d'une glissière constituée par des protubérances d'une paroi du réservoir », on entend désigner le fait que la languette de retenue a une forme complémentaire de celle d'une saillie de la paroi du réservoir et que la coopération entre ces formes permet de limiter un déplacement du dispositif de fixation, notamment elle permet de limiter un coulissement du dispositif de fixation dans la glissière dans le sens du retrait. La languette de retenue est ainsi par exemple clipsée sur la saillie de la paroi du réservoir.

Par l'expression « la languette de retenue étant apte à être déformée à l'encontre d'une force élastique de rappel en configuration de verrouillage afin de déverrouiller les moyens de verrouillage et permettre un retrait du dispositif de fixation de la glissière constituée par des protubérances d'une paroi du réservoir », on entend désigner le fait qu'une force peut être appliquée sur la languette de retenue afin de la déformer élastiquement de manière à l'éloigner de la saillie de la paroi du réservoir afin de déverrouiller les moyens de verrouillage et permettre le coulissement du dispositif de fixation dans la glissière dans le sens du retrait et le fait que, une fois que la force ayant permis de déformer la languette de retenue cesse d'être appliquée, la languette de retenue est rappelée élastiquement en configuration de verrouillage. On comprend que ce rappel élastique permet, en l'absence de force allant à son encontre, d'assurer le maintien de la languette de retenue contre la saillie de la paroi du réservoir lorsque le dispositif de fixation est fixé sur le réservoir afin d'assurer un verrouillage efficace par les moyens de verrouillage et donc d'assurer le maintien du dispositif de fixation en position, même en cas de déformation du réservoir.

L'invention concerne également un composant antibruit pour réservoir en matière plastique pour véhicule automobile.

Selon l'invention, un tel composant antibruit pour réservoir automobile en matière plastique pour véhicule automobile comprend un déflecteur et un dispositif de fixation selon l'invention.

Selon un mode de réalisation préféré, le composant antibruit pour réservoir automobile en matière plastique pour véhicule automobile est tel qu'il comprend au moins un déflecteur et deux dispositifs de fixation selon l'invention, les deux dispositifs de fixation étant préférentiellement situés de part et d'autre du déflecteur.

Avantageusement le composant antibruit pour réservoir automobile en matière plastique pour véhicule automobile est monobloc permettant ainsi d'obtenir une meilleure tenue mécanique du composant.

Alternativement au mode précédent, le composant antibruit pour réservoir automobile en matière plastique pour véhicule automobile comprend au moins un déflecteur et au moins un dispositif de fixation selon l'invention, le déflecteur et le dispositif de fixation étant attaché l'un à l'autre par un moyen de fixation préférentiellement choisi parmi un moyen de fixation mécanique tel qu'un emboîtage élastique comme par exemple un enclipsage, un assemblage par goujon ou agrafe et/ou un moyen de fixation chimique tel qu'un collage ou un soudage.

L'invention concerne également un réservoir en matière plastique pour véhicule automobile comprenant un composant antibruit selon l'invention, ledit composant antibruit étant fixé par insertion au sein de la glissière constituée par des protubérances d'une paroi du réservoir.

Selon un mode de réalisation préféré, le réservoir en matière plastique pour véhicule automobile selon l'invention est tel que le composant antibruit est fixé par insertion au sein d'au moins deux glissières constituées par des protubérances d'une paroi du réservoir, les deux glissières étant situées préférentiellement sur des parois du réservoir opposées l'une de l'autre.

Selon un mode de réalisation préféré, le réservoir en matière plastique pour véhicule automobile selon l'invention est tel qu'il présente un espace entre au moins une nervure de retenue, préférentiellement toutes les nervures de retenue, du second système de nervures et la partie supérieure de la glissière.

Ainsi un jeu mécanique est prévu entre au moins une nervure de retenue et la paroi du réservoir, préférentiellement entre toutes les nervures et les protubérances constituant la partie supérieure de la glissière.

Selon une mode de réalisation préféré, le réservoir en matière plastique pour véhicule automobile selon l'invention est tel que la glissière comprend au moins une butée.

Ainsi, la présence de la butée au sein de la glissière permet de stopper l'insertion du composant au travers de son dispositif de fixation au sein de la glissière. Avantageusement la glissière comprend un moyen de retenue mécanique du composant formant un emboîtage élastique avec le composant au travers de son dispositif de fixation.

L'invention concerne en outre un procédé de fabrication d'un réservoir en matière plastique pour véhicule automobile.

Le procédé selon l'invention comprend les étapes suivantes :
- Fourniture d'un réservoir comprenant une glissière constituée par des protubérances d'une paroi du réservoir ;
- Insertion par glissement au sein de la glissière d'un composant antibruit selon l'invention.

Selon une mise en œuvre avantageuse, le procédé de fabrication d'un réservoir en matière plastique pour véhicule automobile selon l'invention est tel que l'étape d'insertion par glissement comprend les étapes de :
- Insertion d'un dispositif de fixation selon l'invention au sein de la glissière constituée par des protubérances d'une paroi du réservoir ;
- Fixation d'un déflecteur sur le dispositif de fixation selon l'invention.

### Description des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la [Fig.1] présente une coupe transversale d'un dispositif de fixation à un réservoir en matière plastique pour véhicule automobile d'un déflecteur destiné à coopérer avec un fluide contenu dans le réservoir pour limiter les bruits de mouvement de ce fluide selon l'invention.
- la [Fig.2] illustre le composant antibruit selon l'invention.
- la [Fig.3] décrit en détail le mode de fixation d'un composant antibruit selon l'invention au sein d'un réservoir en matière plastique pour véhicule automobile.
- la [Fig.4] présente une vue en surélévation trois-quarts face d'un composant antibruit selon l'invention au sein d'un réservoir en matière plastique pour véhicule automobile.
- la [Fig.5] présente une vue en surélévation trois-quarts face d'un composant antibruit selon l'invention au sein d'un réservoir en matière plastique pour véhicule automobile.
- la [Fig.6] présente une coupe transversale d'un dispositif de fixation d'un déflecteur selon l'invention, ledit dispositif de fixation étant fixé au sein d'un réservoir en matière plastique pour véhicule automobile.
- la [Fig.7] présente une vue en surélévation de trois-quarts arrière d'un composant antibruit selon une variante de réalisation de l'invention au sein d'un réservoir en matière plastique pour véhicule automobile.
- la [Fig.8] présente une vue de côté du composant antibruit selon la variante de réalisation de la [Fig.7].

### Description d'au moins un mode de réalisation de l'invention

On a représenté sur les figures un repère XYZ pour lequel l'axe X correspond à la direction longitudinale, l'axe Y correspond à la direction transversale, et l'axe Z correspond à la direction verticale.

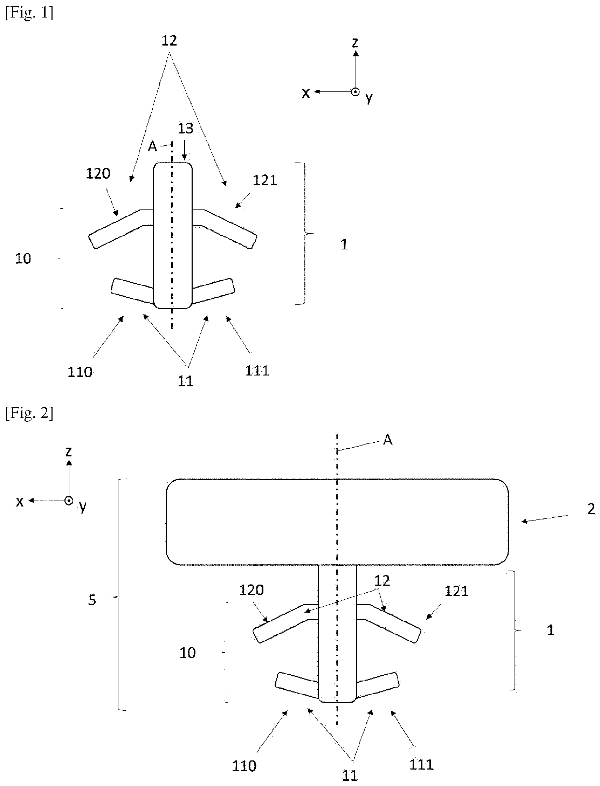

On présente, en relation avec la [Fig.1], un mode de réalisation d'un dispositif de fixation 1 à un réservoir en matière plastique pour véhicule automobile d'un déflecteur destiné à coopérer avec un fluide contenu dans le réservoir pour limiter les bruits de mouvement de ce fluide. Le dispositif de fixation comprenant une première extrémité 10 comprenant un premier système de nervures 11 comprenant au moins deux nervures 110, 111, dite nervures d'insertion, s'étendant à l'opposé l'une de l'autre, le premier système de nervure 11 étant configuré pour être inséré par glissement au sein d'une glissière constituée par des protubérances d'une paroi du réservoir, ladite première extrémité 11 comprenant un second système de nervures 12 configuré pour être situé en dehors de la glissière, ledit second système de nervures 12 comprenant au moins deux nervures 120, 121, dites nervures de retenue, s'étendant à l'opposé l'une de l'autre, chaque nervure de retenue du second système de nervures étant configurée pour venir en contre appui sur la paroi du réservoir lors d'une déformation dudit réservoir, plus particulièrement lors d'une déformation par mise en dépression du réservoir. Les nervures d'insertion 110, 111 se trouvent en vis-à-vis des nervures de retenue 120, 121. On remarque que le second système de nervures 12 comprend des nervures de retenue 120, 121 comprenant un côté concave par rapport à au moins une nervure d'insertion. Le dispositif de fixation comprend également un moyen de fixation 13 configuré pour l'attache du déflecteur. Le dispositif de fixation 1 comprend un axe principal A.

La [Fig.2] illustre un mode de réalisation d'un composant antibruit 5 pour un réservoir en matière plastique pour véhicule automobile comprenant un déflecteur 2 et un dispositif de fixation 1 tel que représenté à la [Fig.1]. Le composant antibruit 5 comprend un déflecteur 2 et un dispositif de fixation 1 comprenant une première extrémité 10 comprenant un premier système de nervures 11 comprenant au moins deux nervures 110, 111, dite nervures d'insertion, s'étendant à l'opposé l'une de l'autre, le premier système de nervure 11 étant configuré pour être inséré par glissement au sein d'une glissière constituée par des protubérances d'une paroi du réservoir, ladite première extrémité 10 comprenant un second système de nervures 12 configuré pour être situé en dehors de la glissière, ledit second système de nervures 12 comprenant au moins deux nervures 120, 121, dites nervures de retenue, s'étendant à l'opposé l'une de l'autre, chaque nervure de retenue du second système de nervures étant configurée pour venir en contre appui sur la paroi du réservoir lors d'une déformation dudit réservoir, plus particulièrement lors d'une déformation par mise en dépression du réservoir. Les nervures d'insertion 110, 111 se trouvent en vis-à-vis des nervures de retenue 120, 121. On remarque que le second système de nervures 12 comprend des nervures de retenue 120, 121 comprenant un côté concave par rapport à au moins une nervure d'insertion.

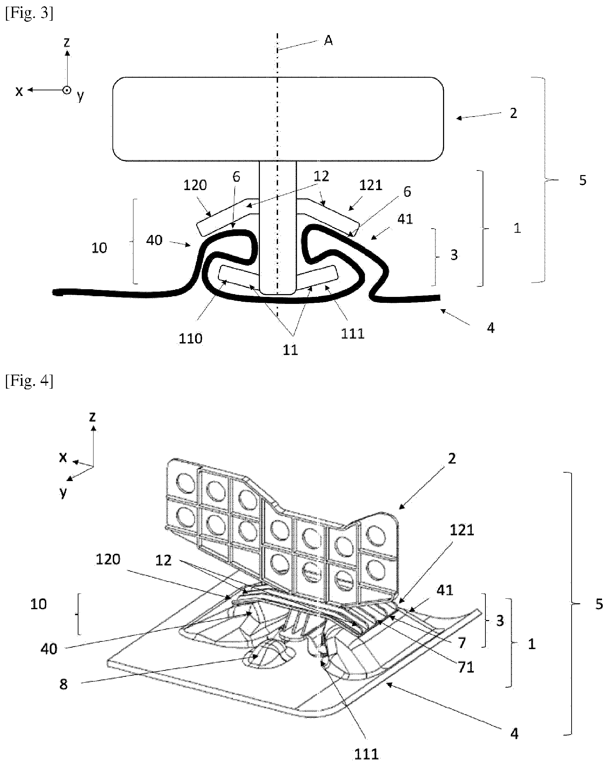

La [Fig.3] illustre un mode de fixation du composant antibruit 5 selon l'invention au sein d'un réservoir en matière plastique pour automobile. Le composant antibruit 5 comprend un déflecteur 2 et un dispositif de fixation 1 comprenant une première extrémité 10 comprenant un premier système de nervures 11 comprenant au moins deux nervures 110, 111, dite nervures d'insertion, s'étendant à l'opposé l'une de l'autre, le premier système de nervure 11 étant configuré pour être inséré par glissement au sein d'une glissière 3 constituée par des protubérances 40, 41 d'une paroi 4 du réservoir, ladite première extrémité 10 comprenant un second système de nervures 12 configuré pour être situé en dehors de la glissière 3, ledit second système de nervures 12 comprenant au moins deux nervures 120, 121, dites nervures de retenue, s'étendant à l'opposé l'une de l'autre, chaque nervure de retenue du second système de nervures étant configurée pour venir en contre appui sur la paroi du réservoir 4 lors d'une déformation dudit réservoir, plus particulièrement lors d'une déformation par mise en dépression du réservoir. Les nervures d'insertion 110, 111 se trouvent en vis-à-vis des nervures de retenue 120, 121. Plus particulièrement, on remarque que les nervures d'insertion 110, 111 et les nervures de retenue 120, 121 sont configurées pour qu'au moins une protubérance 40, 41 de la paroi 4 du réservoir formant la glissière 3 soit intercalée axialement entre les nervures d'insertion 110, 111 et les nervures de retenue 120, 121 lorsque le dispositif de fixation 1 est fixé au réservoir. Ainsi, en suivant la direction de l'axe principal A du dispositif de fixation 1, on rencontre successivement une nervure d'insertion 110, 111, une protubérance 40, 41 de la paroi 4 du réservoir formant la glissière 3, et une nervure de retenue 120, 121. Par cette disposition, l'au moins une protubérance 40, 41 de la paroi 4 du réservoir formant la glissière 3 est prise en sandwich axialement par les nervures d'insertion 110, 111 et de retenue 120, 121 lors d'une déformation du réservoir. Cette configuration est particulièrement utile pour maintenir le dispositif de fixation 1 en place même en cas de déformation importante du réservoir, en particulier lors d'une déformation du réservoir par mise en dépression du réservoir. On remarque que le second système de nervures 12 comprend des nervures de retenue 120, 121 comprenant un côté concave par rapport à au moins une nervure d'insertion. Le réservoir présente un espace 6 entre toutes les nervures de retenue 120, 121 du second système de nervures 12 et la partie supérieure de la glissière 3. Cet espace 6 permet la création d'un jeu mécanique entre les nervures de retenue 120, 121 et la paroi 4 du réservoir, préférentiellement entre les au moins deux nervures de retenue 120, 121 et les protubérances 40, 41 constituant la partie supérieure de la glissière 3.

La [Fig.4] illustre un mode de fixation du composant antibruit 5 selon l'invention au sein d'un réservoir en matière plastique pour automobile. Le composant antibruit 5 comprend un déflecteur 2 et un dispositif de fixation 1 comprenant une première extrémité 10 comprenant un premier système de nervures 11 comprenant au moins deux nervures 110, 111, dite nervures d'insertion, s'étendant à l'opposé l'une de l'autre, le premier système de nervure 11 étant configuré pour être inséré par glissement au sein d'une glissière 3 constituée par des protubérances 40, 41 d'une paroi 4 du réservoir, ladite première extrémité 10 comprenant un second système de nervures 12 configuré pour être situé en dehors de la glissière 3, ledit second système de nervures 12 comprenant au moins deux nervures 120, 121, dites nervures de retenue, s'étendant à l'opposé l'une de l'autre, chaque nervure de retenue du second système de nervures étant configurée pour venir en contre appui sur la paroi 4 du réservoir lors d'une déformation dudit réservoir, plus particulièrement lors d'une déformation par mise en dépression du réservoir. Les nervures d'insertion 111 se trouvent en vis-à-vis des nervures de retenue 121. On remarque que le second système de nervures 12 comprend des nervures de retenue 120, 121 comprenant un côté concave par rapport à au moins une nervure d'insertion. Le second système de nervures 12 comprend également au moins un moyen de rigidification 7, ledit moyen de rigidification 7 comprenant au moins une nervure de rigidification 71. On remarque que la glissière comprend également une butée 8 constituée par une protubérance de la paroi du réservoir. Le déflecteur 2 est orienté dans une direction perpendiculaire à la longueur de la glissière 3.

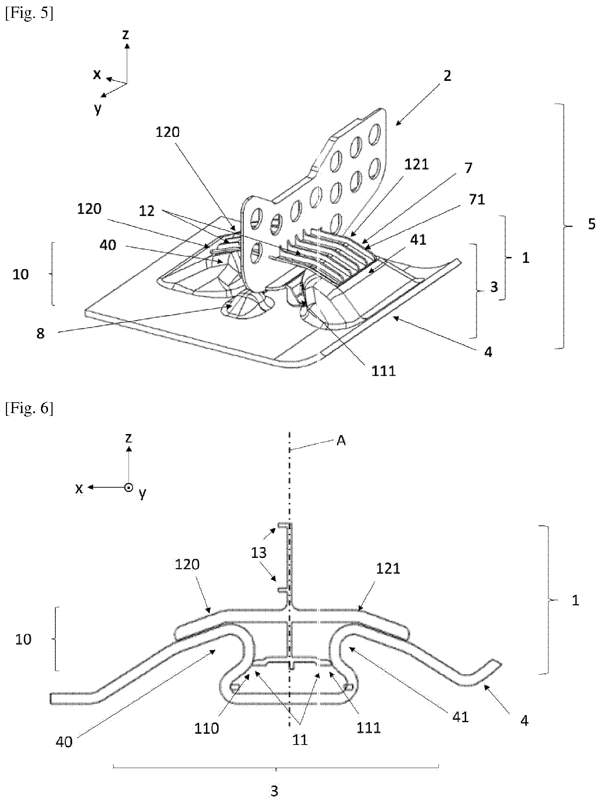

La [Fig.5] divulgue un mode de fixation du composant antibruit 5 selon l'invention au sein d'un réservoir en matière plastique pour automobile. Dans ce mode de réalisation, le déflecteur 2 est orienté dans une direction parallèle à la longueur de la glissière 3.

La [Fig.6] illustre une étape d'un mode de mise en œuvre d'un procédé de fabrication d'un réservoir en matière plastique pour véhicule automobile comprenant un déflecteur et un dispositif de fixation 1. On observe que le déflecteur n'est pas encore fixé sur le dispositif de fixation 1. Ce dernier comprend une première extrémité 10 comprenant un premier système de nervures 11 comprenant au moins deux nervures 110, 111, dite nervures d'insertion, s'étendant à l'opposé l'une de l'autre, le premier système de nervure 11 étant configuré pour être inséré par glissement au sein d'une glissière constituée par des protubérances 40, 41 d'une paroi 4 du réservoir, ladite première extrémité 10 comprenant un second système de nervures 12 configuré pour être situé en dehors de la glissière 3, ledit second système de nervures 12 comprenant au moins deux nervures 120, 121, dites nervures de retenue, s'étendant à l'opposé l'une de l'autre, chaque nervure de retenue du second système de nervures étant configurée pour venir en contre appui sur la paroi 4 du réservoir lors d'une déformation dudit réservoir, plus particulièrement lors d'une déformation par mise en dépression du réservoir. Les nervures d'insertion 110, 111 se trouvent en vis-à-vis des nervures de retenue 120, 121. Les nervures d'insertion 110, 111 et les nervures de retenue 120, 121 sont configurées pour que les protubérances 40, 41 de la paroi 4 du réservoir formant la glissière 3 soit intercalées axialement entre les nervures d'insertion 110, 111 et les nervures de retenue 120, 121. Le dispositif de fixation 1 est fixé au réservoir laissant libre le moyen de fixation 13 configuré pour l'attache du déflecteur 2. Le moyen de fixation 13 comprend deux points d'enclipsage configuré pour fixer le déflecteur.

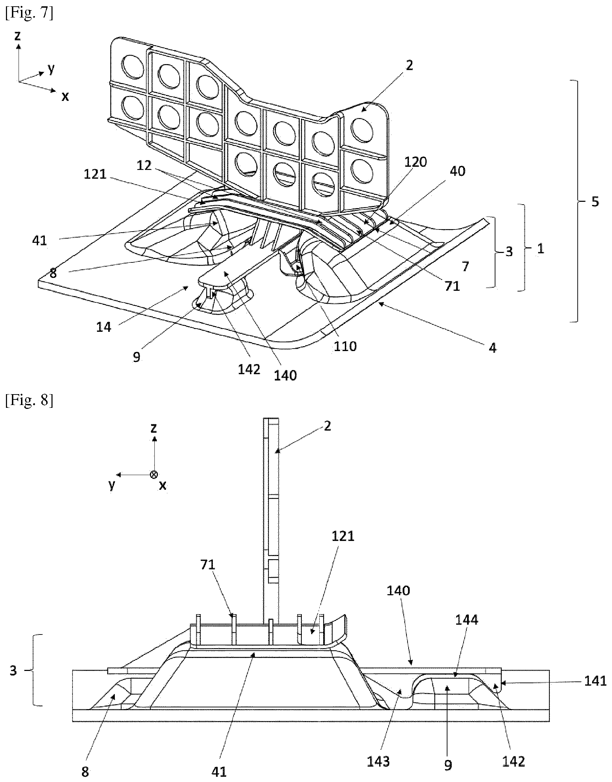

Les figures 7 et 8 illustrent un dispositif de fixation 1 selon un autre mode de réalisation. Selon ce mode de réalisation, le dispositif de fixation 1 comprend en outre des moyens de verrouillage 14 destinés à coopérer par complémentarité de forme avec la paroi 4 du réservoir de manière à empêcher un retrait du dispositif de fixation 1 de la glissière 3 constituée par des protubérances 40, 41 de la paroi 4 du réservoir. Plus particulièrement, dans le cas présent, les moyens de verrouillage 14 comprennent une languette de retenue 140 élastique qui, lorsque le dispositif de fixation 1 est fixé au réservoir, est agencée selon une configuration de verrouillage visible sur les figures 7 et 8 dans laquelle elle coopère par complémentarité de forme avec une saillie 9 de la paroi 4 du réservoir de manière à empêcher un retrait du dispositif de fixation 1 de la glissière 3. La languette de retenue 140 est apte à être déformée à l'encontre d'une force élastique de rappel en configuration de verrouillage afin de déverrouiller les moyens de verrouillage 14 et permettre un retrait du dispositif de fixation 1 de la glissière 3. Cette languette de retenue 140 permet ainsi de clipser le dispositif de fixation 1 au réservoir afin d'améliorer sa fixation à celui-ci en empêchant notamment une translation du dispositif de fixation 1 dans le sens du retrait de la glissière. Dans le cas présent, la languette de retenue 140 comprend sur sa face dirigée vers la saillie 9 une nervure 141 ayant un profil présentant deux saillies 142, 143 séparées par un creux 144, ce profil ayant une forme complémentaire au profil de la saillie 9. Le creux 144 est suffisamment profond pour empêcher un coulissement du dispositif de fixation 1 dans la glissière 3 dans le sens du retrait. On remarque que ce mode de réalisation permet de limiter un coulissement du dispositif de fixation 1 à la fois dans le sens de l'insertion dans la glissière 3 - par la coopération entre la butée 8 et le dispositif de fixation 1 - et dans le sens du retrait de la glissière 3 - par la coopération entre la languette de retenue 140 et la saillie 9. La fixation du dispositif de fixation 1 sur le réservoir est donc particulièrement fiable.

## Revendications

1. Dispositif de fixation (1) à un réservoir en matière plastique pour véhicule automobile d'un déflecteur (2) destiné à coopérer avec un fluide contenu dans le réservoir pour limiter les bruits de mouvement de ce fluide, le dispositif de fixation (1) comprenant une première extrémité (10) comprenant un premier système de nervures (11) comprenant au moins deux nervures (110, 111), dite nervures d'insertion, s'étendant à l'opposé l'une de l'autre, le premier système de nervure (11) étant configuré pour être inséré par glissement au sein d'une glissière (3) constituée par des protubérances (40, 41) d'une paroi (4) du réservoir, ladite première extrémité (10) comprenant un second système de nervures (12) configuré pour être situé en dehors de la glissière (3), ledit second système de nervures (12) comprenant au moins deux nervures (120, 121), dites nervures de retenue, s'étendant à l'opposé l'une de l'autre, chaque nervure de retenue du second système de nervures (12) étant configurée pour venir en contre appui sur la paroi (4) du réservoir et maintenir le dispositif de fixation en position, **caractérisé en ce que** les nervures d'insertion (110, 111) et les nervures de retenue (120, 121) sont configurées pour qu'au moins une protubérance (40, 41) de la paroi (4) du réservoir formant la glissière (3) soit intercalée axialement entre les nervures d'insertion (110, 111) et les nervures de retenue (120, 121) lorsque le dispositif de fixation (1) est fixé au réservoir.

2. Dispositif de fixation (1) à un réservoir en matière plastique pour véhicule automobile d'un déflecteur (2) destiné à coopérer avec un fluide contenu dans le réservoir pour limiter les bruits de mouvement de ce fluide selon la revendication 1, tel que le second système de nervures (12) comprend au moins un moyen de rigidification (7).

3. Dispositif de fixation (1) à un réservoir en matière plastique pour véhicule automobile d'un déflecteur (2) destiné à coopérer avec un fluide contenu dans le réservoir pour limiter les bruits de mouvement de ce fluide selon la revendication 2, tel que le moyen de rigidification (7) comprend au moins une nervure de rigidification (71).

4. Dispositif de fixation (1) à un réservoir en matière plastique pour véhicule automobile d'un déflecteur (2) destiné à coopérer avec un fluide contenu dans le réservoir pour limiter les bruits de mouvement de ce fluide selon l'une quelconque des revendications précédentes, tel que le premier système de nervures (11) comprend au moins une nervure d'insertion, préférentiellement deux nervures d'insertion opposées l'une de l'autre (110, 111), de longueur égale à la longueur d'une glissière (3) constituée par des protubérances (40, 41) d'une paroi (4) du réservoir dans laquelle le premier système de nervures (11) est configuré pour être inséré par glissement.

5. Dispositif de fixation (1) à un réservoir en matière plastique pour véhicule automobile d'un déflecteur (2) destiné à coopérer avec un fluide contenu dans le réservoir pour limiter les bruits de mouvement de ce fluide selon l'une quelconque des revendications précédentes, tel que le premier système de nervures (11) présente une largeur de dimension sensiblement inférieure à la largeur d'une glissière (3) constituée par des protubérances (40, 41) d'une paroi (4) du réservoir au sein de laquelle le premier système de nervure (11) est configuré pour être inséré par glissement.

6. Dispositif de fixation (1) à un réservoir en matière plastique pour véhicule automobile d'un déflecteur (2) destiné à coopérer avec un fluide contenu dans le réservoir pour limiter les bruits de mouvement de ce fluide selon l'une quelconque des revendications précédentes, tel qu'il est monobloc.

7. Dispositif de fixation (1) à un réservoir en matière plastique pour véhicule automobile d'un déflecteur destiné à coopérer avec un fluide contenu dans le réservoir pour limiter les bruits de mouvement de ce fluide selon l'une quelconque des revendications précédentes, tel qu'au moins une nervure d'insertion (110, 111) est en vis-à-vis d'au moins une nervure de retenue (120, 121).

8. Dispositif de fixation (1) à un réservoir en matière plastique pour véhicule automobile d'un déflecteur (2) destiné à coopérer avec un fluide contenu dans le réservoir pour limiter les bruits de mouvement de ce fluide selon l'une quelconque des revendications précédentes, tel que ledit second système de nervures (12) comprend au moins une nervure de retenue (120, 121) comprenant un côté concave par rapport à au moins une nervure d'insertion (110, 111).

9. Dispositif de fixation (1) à un réservoir en matière plastique pour véhicule automobile d'un déflecteur (2) destiné à coopérer avec un fluide contenu dans le réservoir pour limiter les bruits de mouvement de ce fluide selon l'une quelconque des revendications précédentes, tel qu'il comprend au moins un moyen de fixation (13) configuré pour l'attache du déflecteur (2).

10. Dispositif de fixation (1) à un réservoir en matière plastique pour véhicule automobile d'un déflecteur (2) destiné à coopérer avec un fluide contenu dans le réservoir pour limiter les bruits de mouvement de ce fluide selon l'une quelconque des revendications précédentes, comprenant en outre des moyens de verrouillage (14) destinés à coopérer par complémentarité de forme avec une paroi (4) du réservoir de manière à empêcher un retrait du dispositif de fixation (1) d'une glissière (3) constituée par des protubérances (40, 41) d'une paroi (4) du réservoir.

11. Dispositif de fixation (1) à un réservoir en matière plastique pour véhicule automobile d'un déflecteur (2) destiné à coopérer avec un fluide contenu dans le réservoir pour limiter les bruits de mouvement de ce fluide selon la revendication 10, dans lequel les moyens de verrouillage comprennent une languette de retenue (140) élastique qui, lorsque le dispositif de fixation (1) est fixé au réservoir, est agencée selon une configuration de verrouillage dans laquelle elle coopère par complémentarité de forme avec une saillie (9) d'une paroi (4) du réservoir de manière à empêcher un retrait du dispositif de fixation (1) d'une glissière (3) constituée par des protubérances (40, 41) d'une paroi (4) du réservoir, la languette de retenue (140) étant apte à être déformée à l'encontre d'une force élastique de rappel en configuration de verrouillage afin de déverrouiller les moyens de verrouillage (14) et permettre un retrait du dispositif de fixation (1) de la glissière (3) constituée par des protubérances (40, 41) d'une paroi (4) du réservoir.

12. Composant antibruit (5) pour un réservoir en matière plastique pour véhicule automobile comprenant un déflecteur (2) et un dispositif de fixation (1) selon l'une quelconque des revendications précédentes.

13. Réservoir en matière plastique pour véhicule automobile comprenant un composant antibruit (5) selon la revendication 12, ledit composant antibruit (5) étant fixé par insertion au sein de la glissière (3) constituée par des protubérances (40, 41) d'une paroi (4) du réservoir.

14. Réservoir en matière plastique pour véhicule automobile selon la revendication 13, tel qu'il présente un espace (6) entre au moins une nervure de retenue (120, 121), préférentiellement toutes les nervures de retenue, du second système de nervures (12) et la partie supérieure de la glissière (3).

15. Réservoir en matière plastique pour véhicule automobile selon l'une quelconque des revendication 13 à 14, tel que la glissière (3) comprend au moins une butée (8).

16. Procédé de fabrication d'un réservoir en matière plastique pour véhicule automobile comprenant les étapes suivantes :
• Fourniture d'un réservoir comprenant une glissière (3) constituée par des protubérances (40, 41) d'une paroi (4) du réservoir ;
• Insertion par glissement au sein de la glissière (3) d'un composant antibruit (5) selon la revendication 12.

17. Procédé de fabrication d'un réservoir en matière plastique pour véhicule automobile selon la revendication 16, tel que l'étape d'insertion par glissement comprend les étapes de :
• Insertion d'un dispositif de fixation (1) selon l'une quelconque des revendications 1 à 11 au sein de la glissière (3) constituée par des protubérances (40, 41) d'une paroi (4) du réservoir ;
• Fixation d'un déflecteur (2) sur le dispositif de fixation (1) selon l'une quelconque des revendications 1 à 11.

## Patentansprüche

1. Befestigungsvorrichtung (1) an einem Kunststofftank für Kraftfahrzeuge für einen Deflektor (2), der dazu ausgelegt ist, mit einer im Tank enthaltenen Flüssigkeit zusammenzuwirken, um die Bewegungsgeräusche dieser Flüssigkeit zu begrenzen, wobei die Befestigungsvorrichtung (1) ein erstes Ende (10) mit einem ersten Rippensystem (11) aufweist, das mindestens zwei Rippen (110, 111), sogenannte Einführrippen, aufweist, die sich einander gegenüberliegend erstrecken, wobei das erste Rippensystem (11) konfiguriert ist, in eine Führung (3) eingeschoben zu werden, die aus Vorsprüngen (40, 41) einer Wand (4) des Tanks besteht, wobei das erste Ende (10) ein zweites Rippensystem (12) aufweist, das konfiguriert ist, außerhalb der Führung (3) angeordnet zu werden, wobei das zweite Rippensystem (12) mindestens zwei Rippen (120, 121), sogenannte Halterippen, aufweist, die sich einander gegenüberliegend erstrecken, wobei jede Halterippe des zweiten Rippensystems (12) so konfiguriert ist, dass sie an der Wand (4) des Tanks anliegt und die Befestigungsvorrichtung in ihrer Position hält, **dadurch gekennzeichnet, dass** die Einführrippen (110, 111) und die Halterippen (120, 121) so konfiguriert sind, dass mindestens ein Vorsprung (40, 41) der Wand (4) des Tanks, die die Führung (3) bildet, axial zwischen den Einführrippen (110, 111) und den Halterippen (120, 121) angeordnet ist, wenn die Befestigungsvorrichtung (1) am Tank befestigt ist.

2. Befestigungsvorrichtung (1) an einem Kunststofftank für Kraftfahrzeuge für einen Deflektor (2), der dazu ausgelegt ist, mit einer im Tank enthaltenen Flüssigkeit zusammenzuwirken, um die Bewegungsgeräusche dieser Flüssigkeit zu begrenzen, gemäß Anspruch 1, wobei das zweite Rippensystem (12) mindestens ein Versteifungsmittel (7) aufweist.

3. Befestigungsvorrichtung (1) an einem Kunststofftank für Kraftfahrzeuge für einen Deflektor (2), der dazu ausgelegt ist, mit einer im Tank enthaltenen Flüssigkeit zusammenzuwirken, um die Bewegungsgeräusche dieser Flüssigkeit zu begrenzen, gemäß Anspruch 2, wobei das Versteifungsmittel (7) mindestens eine Versteifungsrippe (71) aufweist.

4. Befestigungsvorrichtung (1) an einem Kunststofftank für Kraftfahrzeuge für einen Deflektor (2), der dazu ausgelegt ist, mit einer im Tank enthaltenen Flüssigkeit zusammenzuwirken, um die Bewegungsgeräusche dieser Flüssigkeit gemäß einem der vorstehenden Ansprüche zu begrenzen, wobei das erste Rippensystem (11) mindestens eine Einführrippe, vorzugsweise zwei einander gegenüberliegende Einführrippen (110, 111) aufweist, die gleich lang sind wie eine Führung (3), die aus Vorsprüngen (40, 41) einer Wand (4) des Tanks besteht, in die das erste Rippensystem (11) zum Einschieben konfiguriert ist.

5. Befestigungsvorrichtung (1) an einem Kunststofftank für Kraftfahrzeuge für einen Deflektor (2), der dazu ausgelegt ist, mit einer im Tank enthaltenen Flüssigkeit zusammenzuwirken, um die Bewegungsgeräusche dieser Flüssigkeit gemäß einem der vorstehenden Ansprüche zu begrenzen, wobei das erste Rippensystem (11) eine Breite aufweist, die wesentlich geringer ist als die Breite einer Führung (3), die aus Vorsprüngen (40, 41) einer Wand (4) des Tanks besteht, in die das erste Rippensystem (11) zum Einschieben konfiguriert ist.

6. Befestigungsvorrichtung (1) an einem Kunststofftank für Kraftfahrzeuge für einen Deflektor (2), der dazu ausgelegt ist, mit einer im Tank enthaltenen Flüssigkeit zusammenzuwirken, um die Bewegungsgeräusche dieser Flüssigkeit gemäß einem der vorstehenden Ansprüche zu begrenzen, wobei sie einteilig ist.

7. Befestigungsvorrichtung (1) an einem Kunststofftank für Kraftfahrzeuge für einen Deflektor, der dazu ausgelegt ist, mit einer im Tank enthaltenen Flüssigkeit zusammenzuwirken, um die Bewegungsgeräusche dieser Flüssigkeit gemäß einem der vorstehenden Ansprüche zu begrenzen, wobei mindestens eine Einführrippe (110, 111) mindestens einer Halterippe (120, 121) gegenüberliegt.

8. Befestigungsvorrichtung (1) an einem Kunststofftank für Kraftfahrzeuge für einen Deflektor (2), der dazu ausgelegt ist, mit einer im Tank enthaltenen Flüssigkeit zusammenzuwirken, um die Bewegungsgeräusche dieser Flüssigkeit zu begrenzen, gemäß einem der vorstehenden Ansprüche, wobei das zweite Rippensystem (12) mindestens eine Halterippe (120, 121) aufweist, die eine konkave Seite in Bezug auf mindestens eine Einführrippe (110, 111) aufweist.

9. Befestigungsvorrichtung (1) an einem Kunststofftank für Kraftfahrzeuge für einen Deflektor (2), der dazu ausgelegt ist, mit einer in dem Tank enthaltenen Flüssigkeit zusammenzuwirken, um die Bewegungsgeräusche dieser Flüssigkeit gemäß einem der vorstehenden Ansprüche zu begrenzen, wobei sie mindestens ein Befestigungsmittel (13) aufweist, das zur Befestigung des Deflektors (2) konfiguriert ist.

10. Befestigungsvorrichtung (1) an einem Kunststofftank für Kraftfahrzeuge für einen Deflektor (2), der dazu ausgelegt ist, mit einer im Tank enthaltenen Flüssigkeit zusammenzuwirken, um die Bewegungsgeräusche dieser Flüssigkeit gemäß einem der vorhergehenden Ansprüche zu begrenzen, wobei sie außerdem Verriegelungsmittel (14) aufweist, die dazu ausgelegt sind, durch komplementäre Form mit einer Wand (4) des Tanks zusammenzuwirken, um ein Herausziehen der Befestigungsvorrichtung (1) aus einer Führung (3) zu verhindern, die durch Vorsprünge (40, 41) einer Wand (4) des Tanks gebildet wird.

11. Befestigungsvorrichtung (1) an einem Kunststofftank für Kraftfahrzeuge für einen Deflektor (2), der dazu ausgelegt ist, mit einer im Tank enthaltenen Flüssigkeit zusammenzuwirken, um die Bewegungsgeräusche dieser Flüssigkeit zu begrenzen, gemäß Anspruch 10, wobei die Verriegelungsmittel eine elastische Haltezunge (140) aufweisen, die, wenn die Befestigungsvorrichtung (1) am Tank befestigt ist, in einer Verriegelungskonfiguration angeordnet ist, in der sie durch komplementäre Form mit einem Vorsprung (9) einer Wand (4) des Tanks zusammenwirkt, um ein Herausziehen der Befestigungsvorrichtung (1) aus einer Führung (3) zu verhindern, die aus Vorsprüngen (40, 41) einer Wand (4) des Tanks besteht, wobei die Haltezunge (140) gegen eine elastische Rückstellkraft in Verriegelungsanordnung verformt werden kann, um die Verriegelungsmittel (14) zu entriegeln und ein Herausziehen der Befestigungsvorrichtung (1) aus der Führung (3), die aus Vorsprüngen (40, 41) einer Wand (4) des Tanks besteht, ermöglicht.

12. Geräuschdämpfende Komponente (5) für einen Kunststofftank für Kraftfahrzeuge, aufweisend einen Deflektor (2) und eine Befestigungsvorrichtung (1) gemäß einem der vorstehenden Ansprüche.

13. Kunststofftank für Kraftfahrzeuge mit einer geräuschdämpfenden Komponente (5) gemäß Anspruch 12, wobei die geräuschdämpfende Komponente (5) durch Einfügen in die Führung (3) befestigt ist, die durch Vorsprünge (40, 41) einer Wand (4) des Tanks gebildet wird.

14. Kunststofftank für Kraftfahrzeuge gemäß Anspruch 13, der einen Raum (6) zwischen mindestens einer Halterippe (120, 121), vorzugsweise allen Halterippen, des zweiten Rippensystems (12) und dem oberen Teil der Führung (3) aufweist.

15. Kunststofftank für Kraftfahrzeuge gemäß einem der Ansprüche 13 bis 14, wobei die Führung (3) mindestens einen Anschlag (8) aufweist.

16. Verfahren zur Herstellung eines Kunststofftanks für Kraftfahrzeuge, das die folgenden Schritte umfasst: .
• Bereitstellen eines Tanks mit einer Führung (3), die aus Vorsprüngen (40, 41) einer Wand (4) des Tanks besteht;
• Einschieben einer geräuschdämpfenden Komponente (5) gemäß Anspruch 12 in die Führung (3).

17. Verfahren zur Herstellung eines Kunststofftanks für Kraftfahrzeuge gemäß Anspruch 16, wobei der Schritt des Einschiebens die folgenden Schritte umfasst:
• Einführen einer Befestigungsvorrichtung (1) gemäß einem der Ansprüche 1 bis 11 in die Führung (3), die aus Vorsprüngen (40, 41) einer Wand (4) des Tanks besteht;
• Befestigen eines Deflektors (2) an der Befestigungsvorrichtung (1) gemäß einem der Ansprüche 1 bis 11.

## Claims

1. Attaching device (1) for attaching to a plastic tank for a motor vehicle a deflector (2) intended to interact with a fluid contained in the tank in order to limit the noises caused by movement of the fluid, the attaching device (1) comprising a first end (10) comprising a first system of ribs (11) comprising at least two ribs (110, 111), called insertion ribs, extending opposite each other, the first system of ribs (11) being configured to be slidably inserted into a sliding guide (3) formed by protrusions (40, 41) on a wall (4) of the tank, said first end (10) comprising a second system of ribs (12) configured to be located outside the sliding guide (3), said second system of ribs (12) comprising at least two ribs (120, 121), called retaining ribs, extending opposite each other, each retaining rib of the second system of ribs (12) being configured to abut against the wall (4) of the tank and hold the attaching device in position, **characterised in that** the insertion ribs (110, 111) and the retaining ribs (120, 121) are configured so that at least one protrusion (40, 41) of the wall (4) of the tank forming the slidign guide (3) is axially interposed between the insertion ribs (110, 111) and the retaining ribs (120, 121) when the attaching device (1) is attached to the tank.

2. Attaching device (1) for attaching to a plastic tank for a motor vehicle a deflector (2) intended to interact with a fluid contained in the tank in order to limit the noises caused by movement of the fluid according to claim 1, such that the second system of ribs (12) comprises at least one stiffening means (7).

3. Attaching device (1) for attaching to a plastic tank for a motor vehicle a deflector (2) intended to interact with a fluid contained in the tank in order to limit the noises caused by movement of the fluid according to claim 2, such that the stiffening means (7) comprises at least one stiffening rib (71).

4. Attaching device (1) for attaching to a plastic tank for a motor vehicle a deflector (2) intended to interact with a fluid contained in the tank in order to limit the noises caused by movement of the fluid according to any one of the preceding claims, such that the first system of ribs (11) comprises at least one insertion rib, preferably two insertion ribs (110, 111) opposite each other, of a length equal to the length of a sliding guide (3) formed by protrusions (40, 41) on a wall (4) of the tank into which the first system of ribs (11) is configured to be inserted by sliding.

5. Attaching device (1) for attaching to a plastic tank for a motor vehicle a deflector (2) intended to interact with a fluid contained in the tank to limit the noises caused by movement of the fluid according to any one of the preceding claims, such that the first system of ribs (11) has a width substantially less than the width of a sliding guide (3) formed by protrusions (40, 41) on a wall (4) of the tank into which the first system of ribs (11) is configured to be inserted by sliding.

6. Attaching device (1) for attaching to a plastic tank for a motor vehicle a deflector (2) intended to interact with a fluid contained in the tank in order to limit the noises caused by movement of the fluid according to any one of the preceding claims, such as it is monobloc.

7. Attaching device (1) for attaching to a plastic tank for a motor vehicle a deflector (2) intended to interact with a fluid contained in the tank in order to limit the noises caused by movement of the fluid according to any one of the preceding claims, such that at least one insertion rib (110, 111) is facing at least one retaining rib (120, 121).

8. Attaching device (1) for attaching to a plastic tank for motor vehicles a deflector (2) intended to interact with a fluid contained in the tank in order to limit the noises caused by movement of the fluid according to any one of the preceding claims, such that said second system of ribs (12) comprises at least one retaining rib (120, 121) comprising a concave side with respect to at least one insertion rib (110, 111).

9. Attaching device (1) for attaching to a plastic tank for a motor vehicle a deflector (2) intended to interact with a fluid contained in the tank in order to limit the noises caused by movement of the fluid according to any one of the preceding claims, such that it comprises at least one attaching mean (13) configured for attaching the deflector (2).

10. Attaching device (1) for attaching to a plastic tank for a motor vehicle a deflector (2) intended to interact with a fluid contained in the tank in order to limit the noises caused by movement of the fluid according to any one of the preceding claims, further comprising locking means (14) intended to cooperate by complementary shape with a wall (4) of the tank so as to prevent removal of the attaching device (1) from a sliding guide (3) formed by protrusions (40, 41) on a wall (4) of the tank.

11. Attaching device (1) for attaching to a plastic tank for a motor vehicle a deflector (2) intended to interact with a fluid contained in the tank in order to limit the noises caused by movement of the fluid according to claim 10, wherein the locking means comprise an elastic retaining tab (140) which, when the attaching device (1) is attached to the tank, is arranged in a locking configuration in which it cooperates by complementary shape with a projection (9) of a wall (4) of the tank so as to prevent removal of the attaching device (1) from a sliding guide (3) formed by protrusions (40, 41) on a wall (4) of the reservoir, the retaining tab (140) being capable of being deformed against an elastic force returning in the locking configuration in order to unlock the locking means (14) and allow removal of the attaching device (1) from the sliding guide (3) formed by protrusions (40, 41) on a wall (4) of the tank.

12. Noise reduction component (5) for a plastic tank for a motor vehicle comprising a deflector (2) and an attaching device (1) according to any one of the preceding claims.

13. Plastic tank for a motor vehicle comprising a noise reduction component (5) according to claim 12, said noise reduction component (5) being fixed by insertion within the sliding guide (3) formed by protrusions (40, 41) of a wall (4) of the tank.

14. Plastic tank for a motor vehicle according to claim 13, such that it has a gap (6) between at least one retaining rib (120, 121), preferably all the retaining ribs, of the second system of ribs (12) and the upper part of the sliding guide (3).

15. Plastic tank for a motor vehicle according to any one of claims 13 to 14, such that the sliding guide (3) comprises at least one abutment (8).

16. Method for manufacturing a plastic tank for a motor vehicle, comprising the following steps:
• Providing a tank comprising a sliding guide (3) formed by protrusions (40, 41) on a wall (4) of the tank;
• inserting by sliding into the sliding guide (3) of a noise reduction component (5) according to claim 12.

17. Method for manufacturing a plastic tank for a motor vehicle according to claim 16, such that the step of insertion by sliding comprises the steps of:
• Inserting an attaching device (1) according to any one of claims 1 to 11 into the sliding guide (3) formed by protrusions (40, 41) on a wall (4) of the tank;
• Attaching a deflector (2) to the attaching device (1) according to any of claims 1 to 11.
